# EUROPEAN PATENT SPECIFICATION

(11) **EP 2 802 410 B1**
(45) Date of publication and mention of the grant of the patent: **04.04.2018**
(21) Application number: 13704994.6
(22) Date of filing: 11.01.2013
(51) Int. Cl.: C10J 3/84, F23C 10/10, B01J 8/44, F23C 10/20, C10J 3/36, C10J 3/48, C10J 3/56

(54) **GRID FOR A FLUIDIZED BED GASIFIER**
GITTER FÜR EINEN WIRBELSCHICHTBETTVERGASER
TAMIS POUR GAZOGÈNE À LIT FLUIDISÉ

(30) Priority: 13.01.2012 FI 20125043
(43) Date of publication of application: 19.11.2014
(73) Proprietor: Andritz Oy, 00180 Helsinki (FI)
(72) Inventor: VIRTA, Heikki, FI-33300 Tampere (FI)
(74) Representative: Hoffmann Eitle
(86) International application number: PCT/FI2013/050034
(87) International publication number: WO 2013/104834

(56) References cited:
- WO-A2-2011/031244
- WO-A2-2011/091080
- GB-A- 937 569
- US-A- 4 332 218
- US-A1- 2009 065 743

## Description

The present invention relates to an air-distribution grid for a fluidized bed gasifier. More precisely, the invention relates to a grid structure in a fluidized bed gasifier, said gasifier comprising
- an atmospheric or pressurized gasification reactor defined by vertical walls, inside which a fluidized bed is maintained,
- a wind box located at the lower part of the gasifier below the reactor,
- a grid, which is arranged between the reactor and the wind box on the upper surface of the wind box and comprises a number of substantially concentric plate rings.

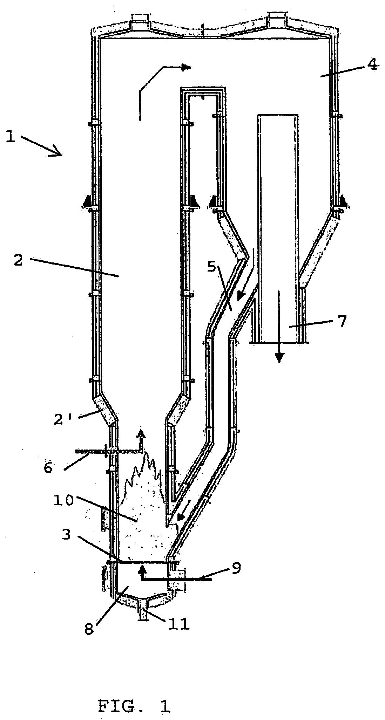

Fluidized bed gasifiers are used for producing gasification gas, e.g. from wood-based fuels. Fig. 1 illustrates a typical circulating fluidized bed gasifier. The gasifier unit in this case is a circulating fluidized bed gasifier 1, i.e. a CFB-gasifier. It comprises a gasification reactor 2, a grid 3, a cyclone 4 and a cyclone return pipe 5. In the lower part of the gasifier is a fluidized bed 10, above which fuel 6 is fed. The fuel is typically a solid bio based or fossil fuel, such as bark, wood chips, coal etc. Ash generated in the gasification is discharged through the grid via a conduit 11. The gasification reactor 2 is a vertical steel cylinder with refractory lining. The fluidized bed 10 formed of bed material and coarse fuel coal is in the lower part of the gasifier. The fuel 6 is fed above this area. The bed area of the gasifier is followed by a conical zone 2', where the diameter of the reactor 2 increases.

The bed in the gasifier is fluidized with gasification air that is led into a wind box 8 of the gasifier below the grid 3, which here is depicted as a simple horizontal plate. The heat required for the gasification is obtained from partial combustion of the fuel. As the fuel reacts, various gaseous components and residual carbon are generated in the bed. When gasifying biomass, the temperature of the gasifier is typically 750-850°C. This temperature is regulated by means of the ratio of gasification air and fuel flow and the capacity of the gasifier is regulated by fuel feed.

The product gas generated in the gasifier flows from the gasification reactor into the cyclone 4, where solid matter, bed material and residual carbon entrained in the gas are separated from the gas. The solids are returned from the bottom of the cyclone into the bed 10 via a return pipe 5, which is connected to the side wall of the cyclone cone and to the bottom part of the gasification reactor. The product gas 7 is led from the cyclone further for further use.

Preheated or cold air, oxygen, nitrogen, steam or a mixture 9 thereof is brought via the grid 3 into the gasification reactor for fluidizing the bed in the gasifier and for source of oxygen for combustion reactions to produce heat for gasification reactions.

The purpose of the grid is to ensure uniform distribution of gasification/fluidizing air onto the whole bed area and to prevent back-flow of the bed material into the wind box. The gasifier grid can be conical and made of steel plate elements. Then the gas nozzles are horizontal and directed towards the ash-discharge of the gasifier. Also various pipe/nozzle grids have been used in various types of gasifiers. A wind box is connected to the bottom of the gasification reactor below the grid, through which box an ash-discharge duct or ducts are arranged.

In a known grid structure the grid is formed of concentric slanted plate rings that are put partly one above the other. The plates are fixed to each other with bolts so that slots are formed between the plates for leading air from the wind box into the reactor of the fluidized bed gasifier. The flow channels are formed by means of separate spacers, which are fixed one by one to the grid plates. The bolts are purpose-made of heat-resistance steel, and thus they are expensive to use. The grid is supported by a thick plate ring attached thereto outermost, which is arranged between the wind box and the large flanges of the gasifier. The grid and the plate ring are exposed to the high temperature of the reactor bed and their thermal expansion causes problems with sealing between the large flanges. This kind of structure is troublesome and expensive to use in large gasifiers. Since the grid itself is of self-bearing type, in large scale applications it leads to very heavy structures. A disadvantage of the known grid is its complex structure, which increases manufacturing costs. Due to the structure of the grid's flow openings, the back-flow phenomenon of gases and bed material easily leads to mechanical wearing of the grid structure and this kind of grid has to be replaced typically at least once a year.

Publication GB 834455 discloses a bottom grate for a fluidized bed reactor comprising concentric bar rings, which are mounted on radial supports fixed to the walls of the air distribution chamber and to the ash-discharge cone of the grate. The cross-section and mutual positioning of the bars is such that tortuous gas passages are formed between them, via which gas can exit in the vertical direction into the reactor. A portion of the required gas is introduced via the middle cone of the grate, from where also ash particles of adequate size exit against the gas stream.

US 2009/0065743 A1 discloses a fluidised bed apparatus having a conical grid structure.

An object of the present invention is to accomplish a grid structure that is simpler and easier to manufacture, and mechanically more durable and more reliable in operation than the known solutions. The grid has to be suitable for large-scale fluidized bed gasifiers, which at present have major demand due to essentially increased capacity demands of plants compared to earlier decades.

It is characteristic of the present grid structure that a first set of concentric plate rings are placed on various levels in the vertical direction to form a conical, downwardly tapering structure, the support structure of which below the grid plates comprises an annular supporting beam and from there radially extending supporting beams that are supported onto walls of the wind box, and that a second set of rings is formed by rings arranged between the first rings, which second rings have nozzle openings for leading air from the wind box into the gasification reactor. An ash discharge duct (or ducts) going through the wind box is/are connected onto the bottom of the grid plates, by means of which the reactor bottom ash is removed from the bottom of the wind box.

The first plate rings or annular plates are arranged on various levels at a distance from each other in the vertical direction. A second ring is arranged between the first two plate rings, whereby the first rings are separated from each other by means of the second rings. Typically the diameters of the rings are of different size, whereby a downwardly tapering conical structure is formed. Typically the shape of the first plate rings is such that their width, i.e. the horizontal extension, is many-fold compared to their thickness (vertical extension).

According to an embodiment the first and the second plate rings are connected to a single grid plate package by welding the plates to each other. Also a screw joint similar to the known grid is possible in this embodiment.

According to an embodiment the grid plate package is positioned to rest on a bearing beam structure so that the grid plates are freely movable with respect to the beam structure. The beam structure and the grid plates are not fixed rigidly to each other in this embodiment. The number of the radial support beams of the beam structure changes as the diameter of the grid of the gasifier changes.

According to an embodiment, the outermost ends of the radial support beams are borne onto walls of the wind box by supports that are welded to the walls of the wind box. Preferably the supports are provided with a sliding shaft coupling, whereto the beam is fixed and which allows radial thermal expansion of the beam structure without loading the walls of the wind box. The radial beams of the beam structure can rotate freely around the sliding shafts, which eliminates from the supports, which are welded to the wall, torques caused by the beam construction. Thus, the supporting structure is not carried at its middle part (a circular support beam) fixedly. An ash discharge duct/channel can be connected thereto, which, however, does not form any part of the supporting structure. Thus, the supporting beam structure rests on said supports, which allows lateral motion.

The plate rings forming the grid are typically planar. Typically the thickness/height of the second rings essentially corresponds to the mutual distance from each other of the first plate rings. The second rings are narrower than the first rings, i.e. their horizontal extension is smaller. According to a preferred embodiment the first and the second rings are horizontal. They can also be slanted, but the use of this kind of inwardly slanted conical plates considerably increases the production costs of the grid.

The nozzle openings in the second rings are directed essentially horizontally, whereby the gas stream is directed towards the center of the grid and the gas can be led so that it pushes the material on the grid towards the discharge opening located in the bottom part of the grid. Typically the nozzle openings or channels extend essentially horizontally through the grid plate package.

The grid rings are typically made of fireproof steel.

The gas-tightness of the outermost edge of the grid against the wall of the wind box is obtained by mounting a sealing plate between the outer edge of the grid and the wall of the wind box. This can be accomplished by welding a thin plate ring provided with a flexible bellows between the grid and the wind box. This allows thermal expansion of the grid in the direction of the grid radius.

Advantages of the invention include e.g. the following:
- The plate-type gas distribution grid according to the invention can be used in fluidized bed gasifiers of all sizes. The known model is complex and expensive to manufacture in large size. In the old model, the grid is a self-supporting model and in a large-scale application it would lead to a very heavy and complex structure. The grid structure of the present invention can be made lighter than the earlier structure, whereby a remarkably more economical grid structure is obtained, especially in large-scale gasifier applications.
- In the model according to the invention the grid plates are supported by a separate beam structure that is located on the wind box side of the grid. The beam structure is supported onto the walls of the wind box instead of the flange between the wind box and the gasifier.
- In the grid of the present invention the bearing structures are subjected to lower temperature than in the known structure. The bearing part (the beam structure) of the grid and the plate structure with its nozzles are not as much subjected to damages caused by thermal stresses as the old structure, which eliminates unnecessary shutdowns. The plate rings of the grid are on the high temperature side (850°C) of the fluidized bed, while the beam structure below the grid plate rings is cooled with air having a temperature of 200-300 °C in the wind box, which keeps the temperature of the support structure much lower than the temperature of the grid plates. Thereby the materials of the support structure are not subjected to such strong requirements and the support beams can be made of cheaper materials than the actual grid plate rings. The grid plate rings can expand freely compared to the beam structure, since the plate rings are not fixed rigidly to the beams.
- The grid plate rings can be combined by welding. In the known solution, bolts or corresponding fasteners are used. If bolt connections provide remarkable advantage, the same attaching method can be used also in the grid according to the present invention.
- The air flow channels of the second plates between the first plates can in the manufacturing stage be made freely to a desired shape depending on what shape is the most suitable for each embodiment. In view of the present invention, the shape of the openings is not essential, but the novel grid structure allows more freedom for the shape in view of the production and design. In the earlier structure, the shape of the air flow channel changes only in the horizontal direction, having in the vertical direction the same height along the whole opening. In the grid of the present invention, the air flow channels can in the manufacturing stage be provided also with vertical portions, thus having an influence on the generation of pressure loss and the back.flow behavior of gases and bed material. The channel structure is simpler and easier to manufacture compared to the known structure.
- In the known structure, the grid is supported by a thick plate ring attached to the grid outermost, which was located between the wind box and the large flanges of the gasifier. Thermal expansion of the grid causes problems with the sealing of a large flange. In the novel structure, thermal expansion of the grid does not have an influence on the flange of the wind box and the gasifier. The gas-tightness of the outermost edge of the grid is achieved by welding a thin sealing plate provided with a flexible bellows between the grid and the wall of the wind box. This allows thermal expansion of the grid in the radial direction.
- The slanted grid plates of the known grid are replaced with horizontal straight plates. Manufacturing of the grid is easier and cheaper than that of the old structure. The novel beam structure does not eliminate the possibility to use slanted plates, if they are required for some other reason.
- In the novel structure, it is possible to modify the structure of the air channels so that they implementable also in large-scale applications having large grids and a great number of grid channels. Additional study and testing are required for obtaining additional information on the best possible geometry of the flow channels.

The present invention is described in more detail by means of a grid embodiment according to the invention and with reference to the accompanying schematic drawings, in which:
Fig. 1 illustrates a typical circulating fluidized bed gasifier
Fig. 2 illustrates schematically a preferred grid structure according to the invention seen from above;
Fig. 3 illustrates schematically the grid structure of Fig, 2 seen from below; and
Figs. 4 and 5 illustrate schematically the grid support welded to the wall of the wind box and its sliding shaft coupling to the grid supporting beam structure, relating to Figs. 2 and 3.

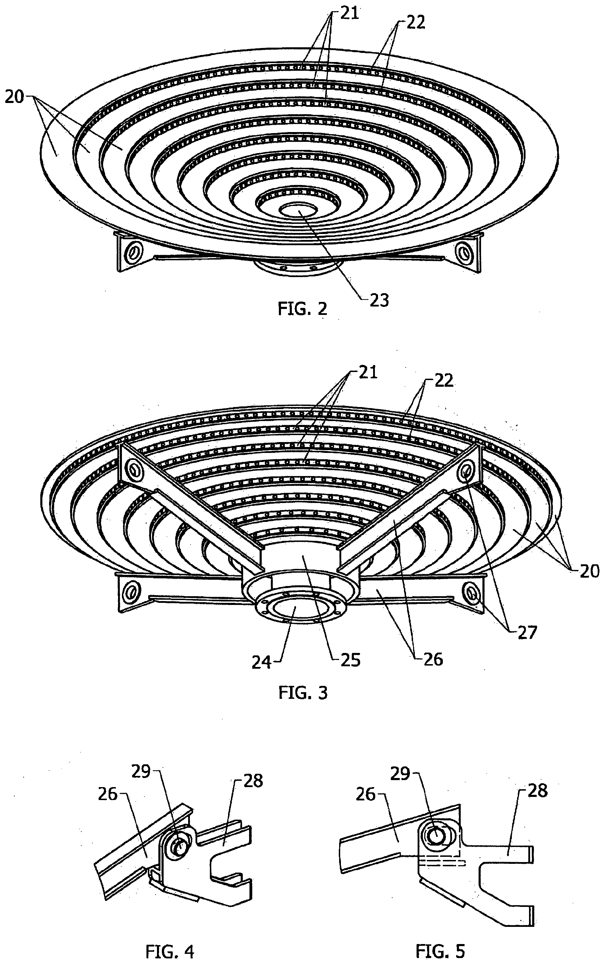

In accordance with Figures 2 and 3, the grid structure is comprised of layers of annular concentric plate rings, which are arranged on different levels to form a downwards tapering conical structure. The rings have diameters of different sizes. The structure has two kinds of plate rings. Simple planar plate rings 20, a first group of rings, form the basic structure of the grid. The first plate rings are most advantageously each horizontal. However, the grid structure does not prevent mounting these plate rings in a slanted position, either. Then the slanting is oriented towards the conical center of the structure.

The second rings 21, the second set of rings, are located between the simple plate rings 20. The thickness/height of the second rings typically corresponds to the mutual distance from each other of the first plate rings. The second rings have openings 22 for forming horizontal gas channels, through which air is led from the wind box into the reactor. The first and the second rings are joined to each other most preferably by welding. The grid structure allows producing various shapes of flow channels, depending on which shape is proven to be the best alternative in each case.

The first and the second plate ring sets form a conical downwards tapering structure provided with an opening at the bottom for ash discharge. The bottom ash of the fluidized bed flows under the force of gasification gas flowing from gas ducts 22 on the surface of the grid towards the opening 23 at the bottom of the grid and is discharged via a discharge duct 24 connected thereto. The package of the plate rings is supported on a beam structure, which is the most substantial bearing structure. The bearing structure comprises an annular supporting beam 25 and radial supporting beams 26 extending radially therefrom, which at their support sleeves 27 are borne onto supports 28 on the walls of the wind box by means of sliding shaft supports 29 (figs. 4 and 5). The bottom of the grid is provided with at least one connection of an ash discharge pipe. The connection is a flange connection in discharge conduit 24.

The grid is designed so that the grid plate package rests freely movable on the beam structure. The structures of the gasification reactor above the grid restrict the possible vertical motion of the grid.

The radial supporting beams 26 are borne at the support sleeves 27 of the outermost ends onto the walls of the wind box by means of the supports 28, which are fixed to the walls of the wind box most preferably by welding. The fixing of the beams 26 to the supports 28 is accomplished by means of a sliding shaft 29 at the support sleeves 27, which allows thermal expansion of the beam structure in the direction of the radius of the grid and eliminates torque caused to the supports located on the wall due to bending of the beam structure Thus, the supporting structure is supported at the outer edges of the beams and its middle point (annular support beam 25) is not fixed inflexibly, whereby the supporting structure is freely suspended at the center. An ash discharge pipe (not shown) is connected flexibly to the ash discharge opening of the grid, whereby lateral motion of the supporting structure is not prevented.

By-pass flow of the gas of the grid is prevented by sealing the space between the outer edge of the grid and the wall of the wind box. Most preferably this is carried out by welding a thin sealing plate (not shown) provided with a flexible bellows between the the grid and the wind box wall. This allows thermal expansion of the grid in the direction of the grid radius.

Although the above description relates to an embodiment of the invention that is in the light of present knowledge considered the most preferable, it is obvious to a person skilled in the art that the invention can be modified in many different ways within the broadest possible scope defined by the appended claims alone.

## Claims

1. A grid structure for a fluidized bed gasifier, said gasifier comprising:
- an atmospheric or pressurized gasification reactor defined by vertical walls, inside which a fluidized bed is maintained,
- a wind box located at the lower part of the gasifier below the reactor,
- a grid, which is arranged between the reactor and the wind box on the upper surface of the wind box and comprises a number of substantially concentric plate rings,
**characterized in that**
a first set of concentric plate rings (20) is arranged at various levels to form a conical downwards tapering structure having a supporting structure which comprises an annular supporting beam (25) below the set of rings and supporting beams (26) extending radially therefrom, which beams (26) at their outer ends are borne onto the walls of the wind box by means of sliding supports (28) for bearing the supporting structure, and that a second group of rings (21) is formed by rings arranged between the first rings (20) and having nozzle openings (22) for leading air or other fluidizing gas into the reactor.

2. The grid structure of claim 1, in which the supporting of the grid is arranged so that the grid plate rings rest freely moving on the supporting beam structure.

3. The grid structure according to any one of the preceding claims, in which the nozzle openings (22) are directed essentially horizontally.

4. The grid structure of any of the preceding claims, in which the outermost ends of the radial beams (26) are supported onto the supports (28) on the wind box walls by means of sliding shaft couplings (27, 29) that allow thermal expansion of the beam structure in the direction of the radius of the grid and further allow rotation of the radial beams (26) around shafts (29) acting as support points.

5. The grid structure according to any of the preceding claims, in which the first (20) and the second rings (21) are horizontal.

6. The grid structure according to any of the preceding claims, in which the first and the second rings are inwards slanted plates.

7. The grid structure according to any of the preceding claims, in which the first (20) and the second rings (21) are connected to form a single plate package by means of welding or bolt connections.

8. The grid structure according to any of the preceding claims, in which a sealing is arranged between the outer edge of the grid and the wall of the wind box by welding therein a thin sealing plate provided with a flexible bellows.

9. The grid structure according to any one of the preceding claims, in which an ash discharge conduit (24) is connected to the bottom of the grid.

## Patentansprüche

1. Roststruktur für einen Wirbelschichtvergaser, wobei der Vergaser umfasst:
- einen atmosphärischen oder druckaufgeladenen Vergasungsreaktor, der durch vertikale Wände definiert ist, wobei eine Wirbelschicht aufrechterhalten wird,
- einen Windkasten, der sich an dem unteren Teil des Vergasers unter dem Reaktor befindet,
- einen Rost, der zwischen dem Reaktor und dem Windkasten an der Oberseite des Windkastens angeordnet ist und eine Anzahl von in dem Wesentlichen konzentrischen Plattenringen umfasst,
**dadurch gekennzeichnet, dass**
ein erster Satz konzentrischer Plattenringe (20) auf verschiedenen Niveaus angeordnet ist, sodass er eine konische, sich nach unten verjüngende Struktur bildet, die eine Stützstruktur aufweist, die einen ringförmigen Stützträger (25) unter dem Satz von Ringen und sich radial davon erstreckende Stützträger (26) umfasst, welche Träger (26) an ihren äußeren Enden mittels Gleitstützen (28) auf den Wänden des Windkastens gelagert werden, um die Stützstruktur zu lagern, und dass eine zweite Gruppe von Ringen (21) durch Ringe gebildet wird, die zwischen den ersten Ringen (20) angeordnet sind und Düsenöffnungen (22) zu dem Einleiten von Luft oder anderem Fluidisierungsgas in den Reaktor aufweisen.

2. Roststruktur nach Anspruch 1, wobei die Unterstützung des Rosts so angeordnet ist, dass die Rostplattenringe frei beweglich auf der Stützträgerstruktur aufliegen.

3. Roststruktur nach einem der vorhergehenden Ansprüche, wobei die Düsenöffnungen (22) in dem Wesentlichen horizontal gerichtet sind.

4. Roststruktur nach einem der vorstehenden Ansprüche, wobei die äußersten Enden der radialen Träger (26) auf den Stützen (28) auf den Windkastenwänden mittels verschiebbarer Wellenkupplungen (27, 29) getragen werden, die die Wärmeausdehnung der Trägerstruktur in der Richtung des Radius des Rosts gestatten und weiter die Rotation der radialen Träger (26) um als Stützpunkte wirkende Wellen (29) gestatten.

5. Roststruktur nach einem der vorstehenden Ansprüche, wobei die ersten (20) und die zweiten Ringe (21) horizontal sind.

6. Roststruktur nach einem der vorstehenden Ansprüche, wobei die ersten und die zweiten Ringe einwärts geneigte Platten sind.

7. Roststruktur nach einem der vorstehenden Ansprüche, wobei die ersten (20) und die zweiten Ringe (21) mittels Schweißen oder Bolzenverbindungen verbunden sind, sodass sie ein einziges Plattenpaket bilden.

8. Roststruktur nach einem der vorstehenden Ansprüche, wobei eine Dichtung zwischen der Außenkante des Rosts und der Wand des Windkastens angeordnet ist, indem eine dünne Dichtungsplatte, die mit einem flexiblen Balg bereitstellen ist, dort hineingeschweißt ist.

9. Roststruktur nach einem der vorstehenden Ansprüche, wobei eine Ascheaustragsleitung (24) mit dem Boden des Rosts verbunden ist.

## Revendications

1. Structure de grille pour un gazéifieur à lit fluidisé, ledit gazéifieur comprenant :
- un réacteur de gazéification atmosphérique ou pressurisé défini par des parois verticales, à l'intérieur duquel un lit fluidisé est maintenu,
- une boîte à vent située au niveau de la partie inférieure du gazéifieur en dessous du réacteur,
- une grille, qui est agencée entre le réacteur et la boîte à vent sur la surface supérieure de la boîte à vent et comprend un nombre d'anneaux en plaque essentiellement concentriques,
**caractérisée en ce que**
un premier ensemble d'anneaux en plaque concentriques (20) est agencé à divers niveaux pour former une structure en pointe vers le bas conique ayant une structure de support qui comprend une poutre de support annulaire (25) sous l'ensemble d'anneaux et des poutres de support (26) s'étendant radialement à partir de celle-ci, lesquelles poutres (26), à leurs extrémités extérieurs, sont supportées sur les parois de la boîte à vent au moyen de supports coulissants (28) pour supporter la structure de support, et **en ce qu'**un second groupe d'anneaux (21) est formé par des anneaux agencés entre les premiers anneaux (20) et ayant des ouvertures de buses (22) pour amener de l'air ou un autre gaz fluidisant dans le réacteur.

2. Structure de grille selon la revendication 1, dans laquelle le support de la grille est agencé de sorte que les anneaux de plaque de grille reposent librement sur la structure de poutres de support.

3. Structure de grille selon l'une quelconque des revendications précédentes, dans laquelle les ouvertures de buse (22) sont dirigées essentiellement horizontalement.

4. Structure de grille selon l'une quelconque des revendications précédentes, dans laquelle les extrémités les plus à l'extérieure des poutres radiales (26) sont supportées sur les supports (28) sur les parois de boite à vent au moyen de raccords d'arbre coulissant (27, 29) qui permettent une dilatation thermique de la structure de poutres dans la direction du rayon de la grille et permettent en outre une rotation des poutres radiales (26) autour d'arbres (29) agissant comme des points de support.

5. Structure de grille selon l'une quelconque des revendications précédentes, dans laquelle les premier (20) et second (21) anneaux sont horizontaux.

6. Structure de grille selon l'une quelconque des revendications précédentes, dans laquelle les premier et second anneaux sont des plaques inclinées vers l'intérieur.

7. Structure de grille selon l'une quelconque des revendications précédentes, dans laquelle les premier (20) et second (21) anneaux sont reliés pour former un seul ensemble de plaques au moyen de connexions par soudage ou par boulons.

8. Structure de grille selon l'une quelconque des revendications précédentes, dans laquelle une étanchéité est prévue entre le bord extérieur de la grille et la paroi de la boîte à vent en y soudant une fine plaque d'étanchéité pourvue d'un soufflet flexible.

9. Structure de grille selon l'une quelconque des revendications précédentes, dans laquelle un conduit d'évacuation de cendres (24) est relié au fond de la grille.
